Europäisches Patentamt

European Patent Office

Office européen des brevets

(11) Numéro de publication : **0 045 260 B1**

(12) # FASCICULE DE BREVET EUROPÉEN

(45) Date de publication du fascicule du brevet :
24.04.85

(51) Int. Cl.⁴ : **H 04 L 27/22**, H 04 L 27/14, H 04 L 7/02

(21) Numéro de dépôt : **81401203.5**

(22) Date de dépôt : **28.07.81**

(54) **Démodulateur de signaux modulés suivant une modulation de phase continue et système de transmission comportant un tel démodulateur.**

(30) Priorité : **29.07.80 FR 8016707**

(43) Date de publication de la demande :
**03.02.82 Bulletin 82/05**

(45) Mention de la délivrance du brevet :
**24.04.85 Bulletin 85/17**

(84) Etats contractants désignés :
**DE FR**

(56) Documents cités :
**US-A- 4 001 775**
**US-A- 4 163 209**

(73) Titulaire : **THOMSON-CSF**
**173, Boulevard Haussmann**
**F-75379 Paris Cedex 08 (FR)**

(72) Inventeur : **Sorton, Gérard**
**THOMSON-CSF-SCPI 173, bld Haussmann**
**F-75360 Paris Cedex 08 (FR)**
Inventeur : **Margulnaud, André**
**THOMSON-CSF-SCPI 173, bld Haussmann**
**F-75360 Paris Cedex 08 (FR)**

(74) Mandataire : **Guilguet, Philippe et al**
**THOMSON-CSF SCPI 173, Bld Haussmann**
**F-75379 Paris Cedex 08 (FR)**

EP 0 045 260 B1

Jouve, 18, rue St-Denis, 75001 Paris, France

**Description**

La présente invention concerne les démodulateurs de signaux modulés suivant une modulation de phase continue et les systèmes de transmission comportant de tels démodulateurs, en particulier les systèmes de transmission de données binaires utilisant des canaux peu fiables à cause des nombreuses perturbations qui affectent la transmission.

Un canal troposphérique, par exemple, occasionne des interférence entre les données, ce qui détériore la démodulation. Ces interférences sont dues à une propagation des signaux suivant des trajets différents.

Actuellement pour effectuer une démodulation adaptée aux caractéristiques du canal, il est connu d'utiliser un filtre transverse suivi d'un démodulateur classique défini pour la réception de signaux provenant d'un canal sans distorsion. Le filtre transverse permet de regénérer le signal original (en amplitude, en phase et en fréquence) et de réaliser l'adaptation, c'est-à-dire de corriger les distorsions subies par le signal au cours de la transmission.

Cette méthode connue présente les deux inconvénients suivants :

— Lors d'un évanouissement temporaire et sélectif du niveau moyen des signaux reçus dû à des variations dans le temps des conditions de propagation, le gain du filtre transverse est augmenté pour les fréquences affaiblies ce qui apporte une dégradation du rapport signal sur bruit global.

—.La correction de distorsion s'applique sur le signal émis alors que pour une modulation à une variation continue de phase, l'information utile n'est contenue que dans un seul paramètre : la phase.

Par ailleurs il est connu (brevet US 4 163 209) de déterminer le niveau logique représenté par l'amplitude d'un signal, soumis à des distorsions, en comparant cette amplitude à un seuil calculé en faisant la moyenne de deux valeurs d'amplitude stockées en mémoire et qui sont les valeurs moyennes des amplitudes de signaux reçus correspondant aux deux niveaux logiques possibles. D'autre part ces valeurs moyennes, pour un bit donné, dépendent de la valeur du bit précédent et de la valeur du bit suivant. Elles sont déterminées puis remises à jour en transmettant une séquence d'initialisation connue, périodiquement pour évoluer en même temps que les caractéristiques du canal de transmission.

D'autre part il est connu de transmettre des données logiques par une modulation de phase continue et de réaliser une démodulation de cette phase par un calcul de convolution, celui-ci constitue un traitement complexe, mais est considéré jusqu'à présent comme la démodulation optimale.

Le démodulateur de la présente invention permet de remédier à ces inconvénients, tout en obtenant des résultats supérieurs.

Selon l'invention, un démodulateur de signaux modulés suivant une modulation de phase continue pour la transmission, à un rythme F, de données binaires, est caractérisé en ce qu'il comporte :

— des moyens de détermination et d'échantillonnage de la phase du signal modulé ;

— des moyens de détermination d'une valeur d'un bit d'après les valeurs de la phase de deux échantillons successifs ;

— des moyens d'estimation de la valeur de bit la plus probablement transmise, en fonction des valeurs de phase des deux échantillons successifs reçues pour ce bit, ces valeurs de phase étant corrigées à l'aide de données mémorisées caractéristiques des effets moyens de la distorsion sur la phase correspondant aux séquences de p bits (p entier, fixé, supérieur ou égal à 2) dont le premier bit est constitué par le bit précédent ;

— des moyens d'estimation de ces données caractéristiques déterminant pour chaque échantillon la différence entre la phase déterminée par les moyens de détermination et d'échantillonnage de la phase du signal modulé et une phase théorique calculée à partir de la phase théorique calculée pour l'échantillon précédent et à partir de la valeur du bit précédent, cette dernière étant déterminée par les moyens de détermination de la valeur d'un bit, d'après les valeurs de la phase de deux échantillons successifs, lesdits moyens estimant, à partir des valeurs de distorsion ainsi déterminées, des données caractéristiques des effets moyens de la distorsion sur la phase pour toutes les séquences de p bits possibles, et mettant en mémoire ces données caractéristiques.

L'invention sera mieux comprise et d'autres caractéristiques apparaîtront à l'aide de la description ci-après et des figures s'y rapportant sur lesquelles :

la figure 1   représente un mode de réalisation du démodulateur selon l'invention ;

les figures 2, 3 et 4   représentent des éléments du démodulateur selon l'invention ;

les figures 5 et 6   représentent des courbes de phase permettant de mieux comprendre le fonctionnement du dispositif selon l'invention.

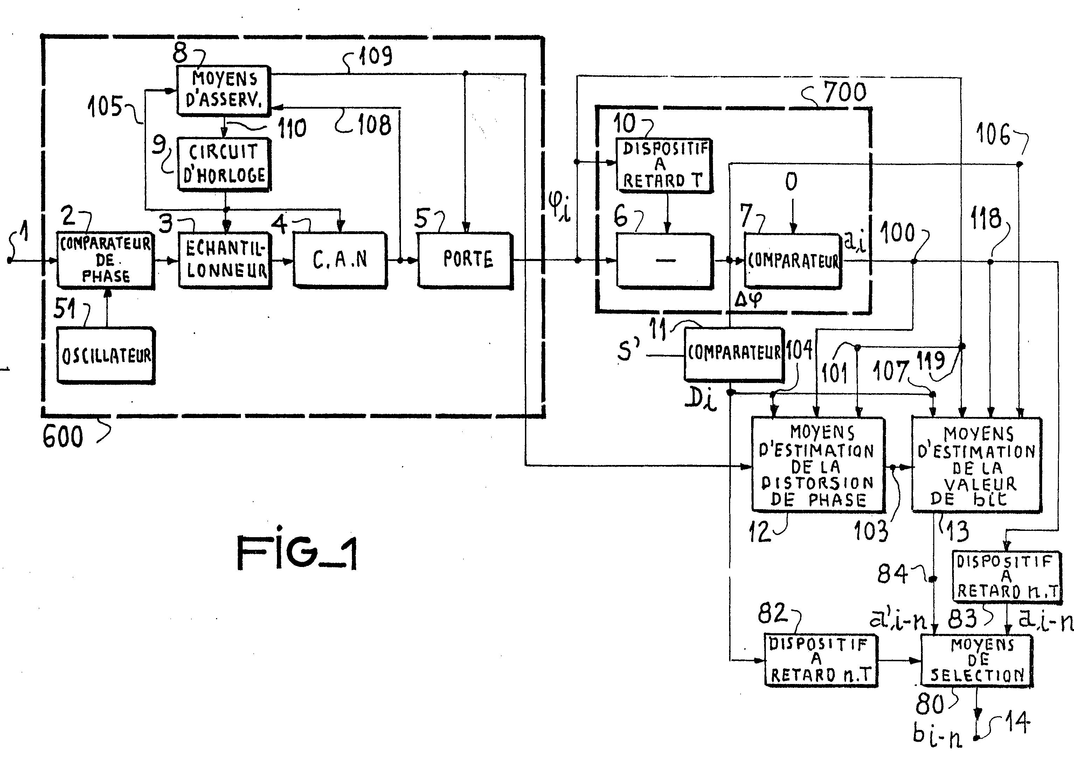

Sur les figures 1, 2, 3 et 4, les dispositifs de synchronisation précise, relevant de la technologie courante, n'ont pas été représentés en vue de rendre les dessins plus clairs et de simplifier l'exposé.

L'exemple de réalisation qui va être décrit s'applique à un démodulateur d'un signal modulé suivant la modulation M.S.K. (« Minimum Shift Keying » en littérature anglo-saxonne), à variation linéaire de phase, mais le principe est valable pour toute modulation à variation continue de phase.

Il est rappelé que la modulation M.S.K. consiste à associer à chaque intervalle de temps de durée T, un bit à transmettre dont la valeur est fonction de la variation de la phase du signal modulé pendant l'intervalle de temps associé. Ainsi, pour une valeur de bit égale à + 1, la phase du signal augmentera de + $\pi/2$ et pour une valeur de bit égal à − 1, la phase du signal diminuera de − $\pi/2$.

**0 045 260**

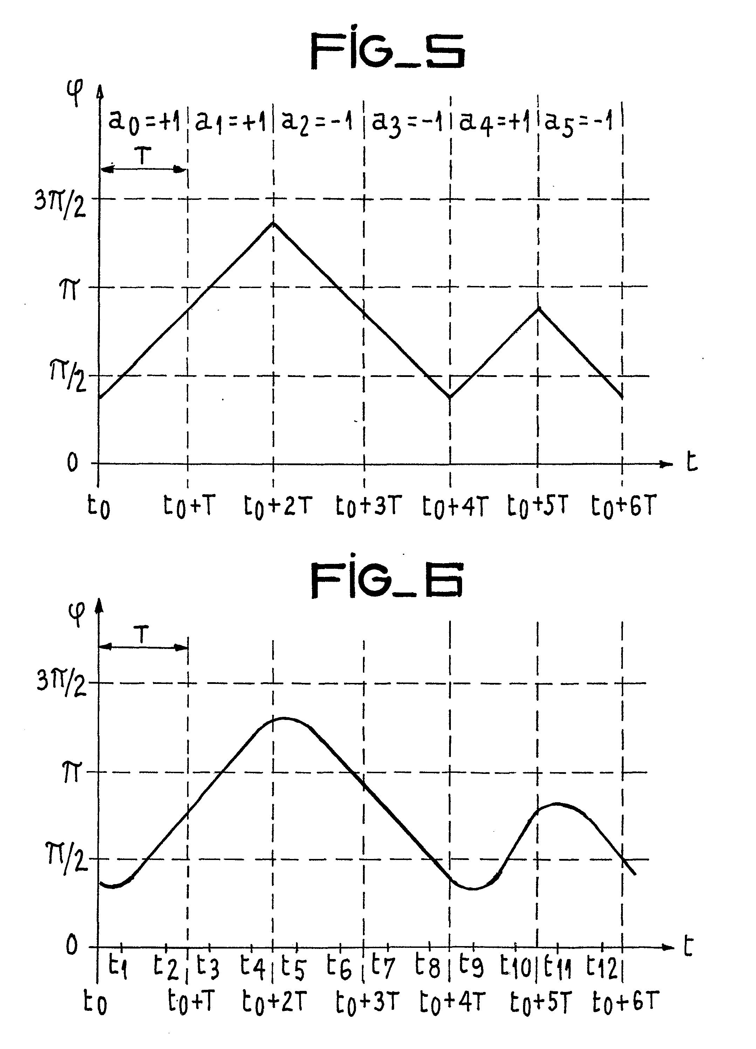

Un exemple de courbe de phase théorique d'un signal modulé en M.S.K. est donné sur la figure 5. A partir d'un instant $t_0$, il est noté pour chaque intervalle de temps de durée T la valeur du bit $a_i$ associé (i variant de 1 à n, n entier positif).

Le principe de démodulation mis en œuvre par le démodulateur selon l'invention consiste à mesurer et échantillonner la phase du signal modulé reçu, à déterminer le sens de variation de la phase de ce signal pendant chaque intervalle de temps de durée T associé à chaque bit, et à en déduire une estimation du bit transmis.

Si la transmission était faite sans distorsions il suffirait de déterminer le sens de variation de la phase reçue pour connaître la valeur exacte $b_i$ du $i^{ème}$ bit. En fait il y a toujours plus ou moins de distorsion, c'est pourquoi le dispositif selon l'invention fonctionne différemment selon deux cas :

— si la valeur absolue de la variation de phase $\Delta\varphi_i$ est supérieure à un seuil S', une valeur $a_i$ du $i^{ème}$ bit est déduite directement du signe de $\Delta\varphi_i$ et est considérée comme certaine. Par exemple :

$$\Delta\phi_i > \frac{\pi}{4} \Rightarrow a_i = +1$$

$$\Delta\phi_i < -\frac{\pi}{4} \Rightarrow a_i = -1$$

— si la valeur absolue de la variation de phase $\Delta\varphi_i$ est inférieure au seuil S', à cause de la distorsion, une valeur $a_i$ du bit, déduite directement du signe de $\Delta\varphi_i$ est considérée comme douteuse. Le dispositif calcule alors une valeur estimée la plus probable, $a'_i$, en corrigeant la variation de phase $\Delta\varphi_i$, d'une valeur de distorsion stockée en mémoire et qui est fonction de deux bits : le bit douteux et celui qui précède le bit douteux considéré. Il a deux valeurs de distorsion possibles puisque le bit précédent est supposé connu et certain.

La table des valeurs de distorsion, stockée en mémoire, est initialisée et remise à jour en estimant la valeur de la distorsion dans les cas où la valeur du bit n'est pas douteuse.

Une telle correction des distorsions de phase est avantageuse non seulement pour éliminer les distorsions dues à la propagation et à la dérive des oscillateurs mais aussi pour éliminer les distorsions dues aux filtres, ce qui permet de filtrer plus efficacement le bruit sans augmenter le taux d'erreur sur les bits.

La structure générale d'un démodulateur mettant en œuvre le principe explicité ci-dessus est représentée sur la figure 1.

Sur cette figure, est représentée une borne d'entrée 1 destinée à recevoir un signal modulé suivant la modulation M.S.K. et couplé à la première entrée d'un comparateur de phase 2 dont la deuxième entrée et la sortie sont respectivement reliées à un oscillateur local 51 et à la première entrée d'un échantillonneur 3.

La sortie de cet échantillonneur 3 est couplée à travers un convertisseur analogique-numérique 4 à l'entrée d'une porte 5 dont l'entrée de commande est connectée à une sortie 109 de moyens d'asservissement 8. Une entrée 108 de ces moyens d'asservissement 8 est reliée à la sortie du convertisseur analogique-numérique 4. En outre, les moyens d'asservissement 8 comportent une sortie 110 couplée, à travers un circuit d'horloge 9, à l'entrée d'horloge de l'échantillonneur 3, à l'entrée d'horloge du convertisseur analogique-numérique 4 et à une entrée 105 des moyens d'asservissement 8. La sortie de la porte 5 est reliée à la première entrée d'un soustracteur 6 et à l'entrée d'un dispositif à retard 10 de retard T, T étant la période des bits. La seconde entrée et la sortie du soustracteur 6 sont respectivement reliées à la sortie du dispositif à retard 10 et à la première entrée d'un comparateur 11. Ce comparateur 11 comporte une deuxième entrée destinée à recevoir une valeur de seuil S'. Un comparateur 7 possède une première entrée reliée à la sortie du soustracteur 6 et une deuxième entrée recevant une valeur fixe 0, et une sortie. Des moyens 12 d'estimation de la distorsion de la phase et des moyens 13 d'estimation de la valeur de bit la plus probablement transmise comportent chacun : une entrée, respectivement 100 et 118, couplée à la sortie du comparateur 7 ; une entrée, respectivement 104 et 107, couplée à la sortie du comparateur 11 ; et une entrée, respectivement 101 et 119, couplée à la sortie de la porte 5. Les moyens 12 d'estimation de la distorsion de la phase, possèdent une entrée reliée à la sortie 109 des moyens d'asservissement 8, et une sortie reliée à une entrée 103 des moyens 13 d'estimation de la valeur du bit la plus probable. Ceux-ci comportent une entrée 106 reliée à la sortie du soustracteur 6, et une sortie 84 qui est reliée à une première entrée de moyens de sélection 80 dont une seconde entrée est couplée à la sortie du comparateur 7 à travers un dispositif à retard 83, de retard n.T. La sortie des moyens de sélection 80 est reliée à une borne de sortie 14, qui constitue la sortie du démodulateur. Une entrée de commande des moyens de sélection 80 est reliée à la sortie du comparateur 11 à travers un dispositif à retard 82, de retard n.T.

Le comparateur de phase 2, l'échantillonneur 3, l'oscillateur local 51, le convertisseur analogique-numérique 4, les moyens d'asservissement 8, le circuit d'horloge 9 et la porte 5 forment des moyens 600 de détermination et d'échantillonnage de la phase du signal.

De même, le dispositif à retard 10, le comparateur 6 et le comparateur 7 constituent des moyens 700 d'évaluation de la valeur du bit reçu.

3

**0 045 260**

Les moyens 600 de détermination et d'échantillonnage de la phase du signal, fournissent, à la fréquence des bits F, par la porte 5 une valeur de phase $\varphi_i$, correspondant au $i^{ème}$ bit reçu. Grâce aux moyens d'asservissement 8 la fréquence d'échantillonnage reste rigoureusement synchronisée sur la fréquence des bits, quel que soit les fluctuations de celle-ci, ce qui permet de limiter l'échantillonnage à un échantillon par bit, et simplifie ainsi le traitement des données reçues.

Une détermination, appelée prédémodulation, du sens de la variation de la phase pendant chaque intervalle de temps T = 1/F est ensuite effectuée à l'aide des moyens 700 d'évaluation de la valeur du bit reçu. Le soustracteur 6 délivre, à chaque instant $t_0 + iT$, la valeur $\Delta\varphi_i$ de la variation de phase du signal d'entrée depuis l'instant $t_0 + (i-1)T$. Le comparateur 7 compare cette valeur à 0 et délivre un « 1 » logique si cette valeur est positive et un « −1 » logique si cette valeur est négative ; le « 1 » logique correspond à une estimation de la variation de phase égale à $+\pi/2$, c'est-à-dire à une estimation de la valeur du bit reçu égale à 1, le « −1 » logique correspond à une estimation de la variation de phase égale à $-\pi/2$.

Afin de déterminer si l'estimation effectuée par le comparateur 7 est sûre (cas non douteux) ou bien erronée (cas douteux), le comparateur 11 effectue une comparaison de la valeur $|\Delta\varphi_i|$ par rapport à un seuil fixe S', qui est inférieur à $\pi/2$. La valeur du seuil est choisie en fonction du taux de bits douteux que peut traiter le dispositif. Si le nombre de bits jugés douteux est trop grand, le dispositif n'a pas le temps de faire les calculs nécessaires pour traiter tous ces bits douteux. Ces calculs sont faits en parallèle avec la réception des bits non douteux ; s'il y a par exemple 1 % de bits douteux, le traitement d'un de ces bits douteux doit être réalisé en temps moyens plus petit que 100.T.

Si la variation de phase $|\Delta\varphi_i|$ est supérieure à S', la prédémodulation effectuée par le comparateur 7 est considérée comme correcte, le comparateur 11 délivre alors sur sa sortie un signal de commande, $D_i = 0$ pour valider les moyens d'estimation 12 de la distorsion. Après avoir été retardé de n.T par le dispositif à retard 82, ce signal de commande est aussi utilisé pour commander les moyens de sélection 80 afin qu'ils délivrent la valeur de bit $a_{i-n}$, non douteuse, présente sur la sortie du dispositif à retard 83, de retard n.T. Cette valeur de bit correspond à la valeur qui a été estimée par le comparateur 7 et qui a été considérée comme correcte par le comparateur 11. Les retards n.T apportés par les dispositifs à retard 82 et 83 correspondent au temps de calcul des moyens d'estimation 13. Pendant le traitement, relativement long, d'un bit douteux, les valeurs de bit non douteuses sont acheminées à travers le dispositif à retard 83 et les moyens de sélection 80 vers la borne de sortie 14 du démodulateur. Les moyens de sélection 80 fournissent sur la borne de sortie 14 soit la valeur $a'_{i-n}$ estimé par les moyens d'estimation 13, soit la valeur $a_{i-n}$ estimé par le comparateur 7, dans le cas où celle-ci est certaine.

Dans le cas contraire, c'est-à-dire $|\Delta\varphi_i|$ inférieure à S', la prédémodulation est considérée comme erronée, le comparateur 11 délivre un signal de commande $D_i = 1$ sur sa sortie pour valider les moyens d'estimation 13 de la valeur du bit la plus probablement transmise. Cette estimation est effectuée en fonction du résultat de la prédémodulation et d'une table de distorsion remise à jour à chaque cas non douteux.

En effet, à partir des valeurs de bits prédémodulées $a_i$ considérées comme correctes, il peut être reconstitué une courbe de variation de phase théorique à partir d'une origine arbitraire $\theta_0$, les valeurs de phase théoriques suivantes étant calculées par la formule :

$$\theta_{i+1} = \theta_i + \frac{\pi}{2}a_i \quad \text{avec} \quad a_i = \text{signe de } (\phi_{i+1} - \phi_i)\,. \tag{1}$$

A chaque cas non douteux, il peut être estimé une valeur de la distorsion en calculant la différence entre $\varphi_i$ (valeur mesurée) et $\theta_i$ (valeur théorique).

Considérons, par exemple, que la distorsion est provoquée par la combinaison de signaux ayant suivis des trajets différents dont les écarts à la réception sont inférieurs à la durée T. La distorsion du signal reçu à l'instant $t_i$ dépend alors de la valeur des deux bits adjacents $(a_{i-1}, a_{i+1})$. Si les écarts atteignaient 2T, la distorsion dépendrait de la valeur des bits :

$$a_{i-2}, a_{i-1}, a_{i+1} \quad \text{et} \quad a_{i+2}.$$

Dans cet exemple de réalisation, il est supposé que l'écart reste inférieur à T. Le couple $(a_{i-1}, a_i)$ peut prendre $2^2$ valeurs différentes. Pour chaque combinaison $(a_{i-1}, a_i)$, il est calculé $\hat{d}_i = \varphi_i - \theta_i$ qui caractérise la distorsion.

La présence de bruit entraîne que, pour d'autres combinaisons estimées identiques, il sera déterminé des valeurs de distorsion différentes distribuées autour d'une valeur médiane dépendant uniquement de la distorsion en l'absence de bruit.

Ainsi, il peut être créé une table de distorsion contenant quatre valeurs médianes de distorsion correspondant aux quatre combinaisons possibles de deux bits. Mais la variation lente dans le temps de la distribution des trajets multiples nécessite un ajustement périodique des valeurs médianes mises en table.

En résumé, le comparateur 11 détermine si l'estimation de la valeur du bit délivrée par le comparateur 7 est correcte ou erronée. Au cas où cette valeur est considérée comme correcte (cas non douteux), la

4

table de distorsion est mise à jour et la valeur délivrée sur la borne de sortie 14, à travers les moyens de sélection 80, est celle estimée par le comparateur 7. Dans le cas contraire, où la valeur est considérée comme erronée (cas douteux), les moyens d'estimation 13 déterminent la valeur la plus probablement reçue à l'aide de la table de distorsion et délivrent cette valeur sur la borne de sortie 14 à travers les moyens de sélection 80.

Le fonctionnement détaillé des moyens 600 de détermination et d'échantillonnage de la phase est décrit ci-dessous, dans le cas, pris pour exemple, d'une transmission par faisceau hertzien où les distorsions de phase varient lentement par rapport à la fréquence de bit. Les valeurs de distorsion peuvent être alors considérées comme constantes pendant la durée de transmission de quelques centaines de bits.

La phase du signal modulé en M.S.K. reçu sur la borne d'entrée 1 est comparée par le comparateur de phase 2 à celle du signal de sortie de l'oscillateur local 51. L'amplitude du signal délivré par le comparateur de phase 2 correspond à la valeur de la phase du signal d'entrée. Des échantillons de la valeur de cette phase sont délivrés à un rythme $2F = 2/T$ par l'échantillonneur 3 puis sont convertis en valeur numérique par le convertisseur analogique-numérique 4, ce qui permet de disposer de deux mesures par intervalle de temps associé à chaque bit.

Il peut être vérifié, sur la figure 6, qui représente un exemple de courbe de phase dans le cas où la phase est altérée par la distorsion, que les couples d'instants de mesure dits « impairs » : $(t_1, t_2)$, $(t_3, t_4)$, $(t_5, t_6)$, $(t_7, t_8)$, $(t_9, t_{10})$, ..., fourniront des informations correctes sur le sens de variation de la phase durant les intervalles de temps associés au bit transmis, alors que les couples dits « pairs » : $(t_2, t_3)$, $(t_4, t_5)$, $(t_6, t_7)$, $(t_8, t_9)$, ..., donneront des informations incorrectes. L'appariement correct des mesures peut être déduit de la comparaison des histogrammes des pentes de la courbe de phase obtenues avec les couples « impairs » et avec les couples « pairs ».

De plus, il est préférable de mesurer la phase du signal aux instants $t_0 + iT$, la variation de phase durant chaque intervalle de temps T sera ainsi déterminée avec plus de précision. Pour cela, les moyens d'asservissement 8, d'une part asservissent la fréquence d'échantillonnage $2F$ fournie par le circuit d'horloge 9 afin que les instants de mesure de phase soient positionnés au milieu et aux extrémités de chaque intervalle de temps de durée T associé au bit transmis, et d'autre part délivrent un signal de commande à l'entrée de commande de la porte 5 afin de ne conserver à la sortie de cette porte que les échantillons correspondant aux instants de mesure $t_0 + iT$.

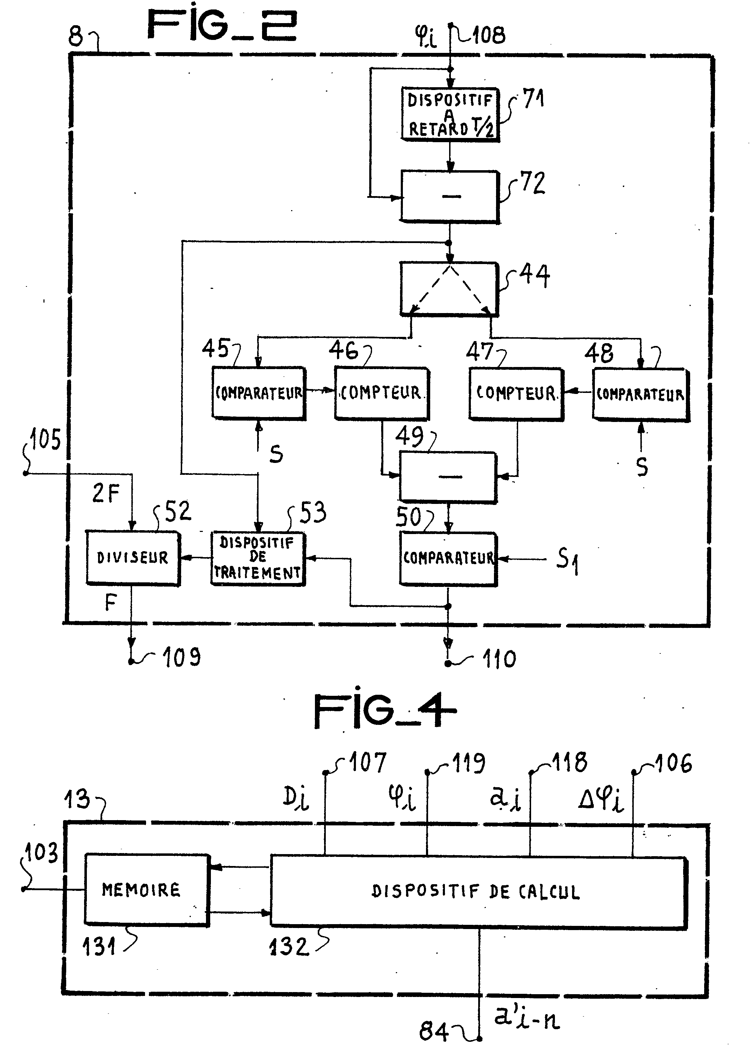

Le fonctionnement de cet exemple de réalisation des moyens d'asservissement 8 sera mieux compris à l'aide de la figure 2 sur laquelle sont représentés les éléments qui les composent.

Sur cette figure 2, un soustracteur 72 soustrait chaque valeur de phase $\varphi_i$ reçue sur la borne d'entrée 108 à la valeur délivrée par un dispositif à retard 71, de retard T/2 dont l'entrée est reliée à la borne 108. Ainsi le soustracteur 72 délivre, suivant le rythme $2F$, les valeurs successives des pentes caractérisant la courbe de phase du signal d'entrée reçu sur la borne 1. Un aiguillage 44 dont l'entrée unique est reliée à la sortie de ce soustracteur 72, aiguille alternativement, à un rythme F, les valeurs des pentes vers les premières entrées de deux comparateurs 45 et 48 pour les comparer à un signal de seuil S appliqué à leurs deuxièmes entrées. La sortie du comparateur 45 et la sortie du comparateur 48 sont respectivement couplées à l'entrée d'un compteur 46 et à l'entrée d'un compteur 47. Les comparateurs 45 et 48 délivrent alternativement un signal de commande pour incrémenter respectivement les compteurs 46 et 47 à condition que la variation de phase analysée soit supérieure au seuil fixé S, par exemple : $0,9 \times \pi/4$. Un soustracteur 49 comportant deux entrées respectivement reliées aux sorties de ces compteurs 46 et 47 permet de calculer la valeur de la différence des contenus des compteurs 46 et 47. Les compteurs 46 et 47 réalisent respectivement un comptage des pentes obtenues avec les couples de mesure dits « pairs » et un comptage des pentes obtenues avec les couples de mesure dits « impairs ». Pour réaliser l'asservissement du circuit d'horloge 9, un comparateur 50, dont la première entrée est couplée à la sortie du soustracteur 49 et dont la deuxième entrée reçoit un signal de seuil $S_1$, délivre sur la borne de sortie 110 un signal de commande de décalage de l'instant de mesure tant que les contenus des compteurs ne sont pas égaux (à une certaine tolérance près). Lorsque l'égalité des contenus des compteurs est obtenue, le comparateur 50 ne délivre plus de signal de commande de décalage, les instants de mesure correspondent alors au milieu et aux extrémités de chaque intervalle de temps de durée T associé au bit transmis. Du fait de la tolérance admissible sur l'égalité des contenus des compteurs, le signal de commande de décalage n'est délivré par le comparateur 50 que lorsque l'écart entre les contenus des compteurs est supérieur au seuil déterminé $S_1$.

Une fois la synchronisation acquise, il n'est plus nécessaire de conserver la mesure de phase au milieu des intervalles de temps associés aux bits, car la différence de phase est la plus grande entre les instants de mesure placés aux extrémités de chaque intervalle. Pour lever l'ambiguïté sur le choix de la mesure initiale comme début de bit, un dispositif de traitement 53 détecte le premier instant de changement de signe des valeurs de pente délivrées par le soustracteur 72 et délivre une impulsion d'initialisation pour initialiser un diviseur 52. Cette impulsion d'initialisation est elle-même validée par le signal logique fourni par le comparateur 50 et qui indique que la synchronisation est acquise. Le diviseur 52 divise par 2 la fréquence $2F$ du signal de sortie du circuit d'horloge 9 présent sur la borne 105. Le signal à la fréquence F ainsi fourni sur la borne de sortie 109 par la sortie du diviseur 52, sert de signal de commande d'ouverture de la porte 5 afin d'inhiber un échantillon sur deux et de n'obtenir à la sortie de la porte 5 que les échantillons correspondant aux extrémités des intervalles de durée T associés aux bits transmis (c'est-à-dire aux instants $t_0 + iT$, figure 5).

La fréquence d'horloge doit suivre les variations du délai de transmission et les dérives relatives des oscillateurs d'émission et de réception. Lorsque les variations de phase ne sont pas lentes par rapport à la fréquence des bits, la fréquence d'échantillonnage doit être très supérieure à la fréquence des bits, afin que l'asservissement de la fréquence d'échantillonnage puisse se synchroniser rapidement sur la fréquence des bits. Un procédé pour asservir la fréquence d'horloge consiste, par exemple, à échantillonner la phase $\varphi(t)$ avec une période $T'$, par exemple $T' = T/10$ ; puis à calculer :

$$H(t_0) = \sum_{j=1}^{N} \mid \phi(t_j + T') - \phi(t_j) \mid,$$

où $t_j$ est un instant d'échantillonnage, tel que :

$$t_1 = t_0 + T'$$
$$t_{j+1} = t_j + T'$$

où $t_0$ est donné et où N est un nombre entier, par exemple 15, qui est égal au nombre de périodes T sur lequel est basé l'évaluation de l'erreur de synchronisation ; à calculer $H(t_0)$ pour q instants d'échantillonnage $t_0$ successifs (q entier, tel que $q \cdot T' > T$) ; et à déterminer pour quelle valeur de $t_0$ la valeur de $H(t_0)$ est maximale. Cette valeur de $t_0$ donne l'instant de début et de fin d'une période des bits, ce qui permet le recalage de l'horloge.

La mise en oeuvre de ce procédé est à la portée de l'homme de l'art.

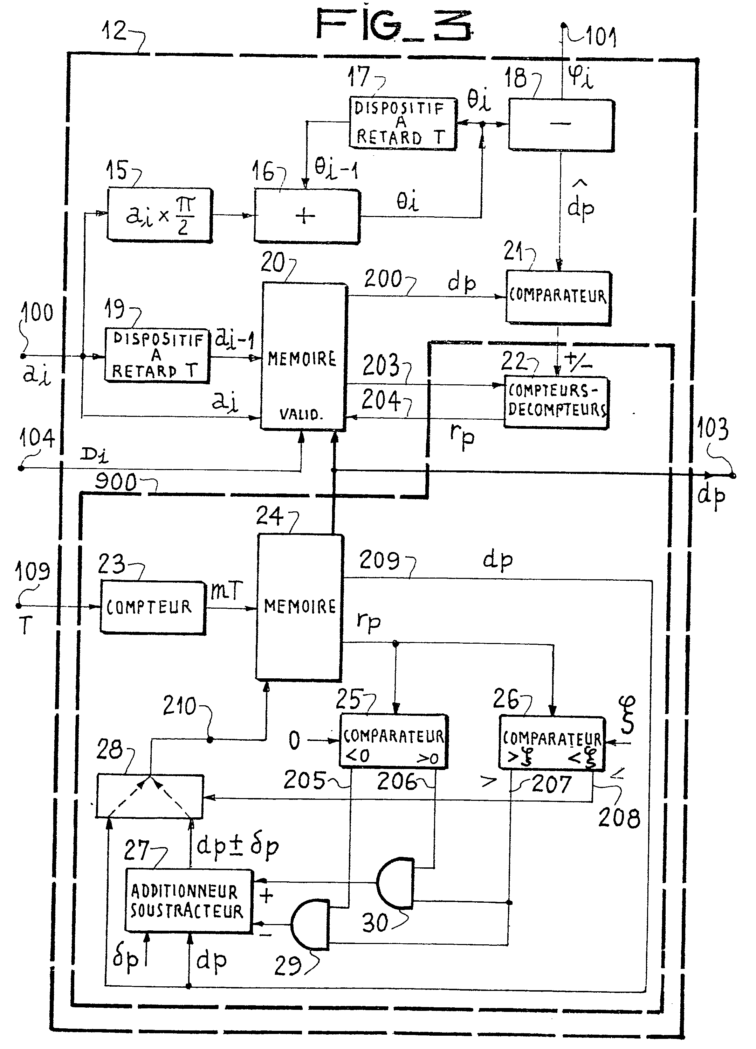

Le fonctionnement des moyens d'estimation 12 et 13 sera mieux compris à l'aide des figures 3 et 4 sur lesquelles ces dispositifs sont respectivement représentés.

Sur la figure 3, les moyens 12 d'estimation de la distorsion comportent une mémoire 20 couplée à une mémoire 24 par un bus. Cette mémoire 20 a deux entrées d'adressage respectivement reliées à l'entrée et à la sortie d'un premier dispositif à retard 19 dont l'entrée est reliée à l'entrée 100 de ces moyens d'estimation. Chacune des mémoires 20 et 24 comprend une première zone de mémoire destinée à mémoriser les valeurs de la table de distorsion et une deuxième zone de mémoire destinée à être utilisée pour le calcul de nouvelles valeurs de distorsion à insérer dans la table de distorsion. Pour ce calcul, il est lu, à chaque instant $t_i$, la valeur médiane $d_p$ de la distorsion représentée dans la table en fonction du couple $(a_i, a_{i-1})$ dont les valeurs des éléments sont respectivement présentes sur la borne 100 et sur la sortie du dispositif à retard 19, de retard T.

Cette valeur mémorisée $d_p$ de la distorsion est fournie à la première entrée 200 d'un comparateur 21 pour être comparée à une estimation $d_p$ de la distorsion à l'instant considérée, fournie à une seconde entrée de ce comparateur 21. Cette estimation $d_p$ est obtenue à la sortie d'un soustracteur 18 qui permet de comparer la valeur mesurée $\varphi_i$ de la phase disponible sur la borne 101 à une valeur théorique $\theta_i$ de cette phase. La valeur $\theta_i$ est déterminée d'après la formule (1)

$$\theta_{i+1} = \theta_i + a_i \cdot \frac{\pi}{2} \tag{1}$$

à l'aide d'un ensemble de circuits comprenant : un circuit de multiplication 15, un circuit d'addition 16, et un deuxième dispositif à retard 17, de retard T.

Le circuit de multiplication 15 couplé par son entrée à la borne 100, fournit à la première entrée du circuit d'addition 16 le produit $a_i \cdot \pi/2$. La seconde entrée et la sortie de ce circuit d'addition 16 sont respectivement reliées à la sortie et à l'entrée du dispositif à retard 17 de sorte que le circuit d'addition 16 détermine la valeur $\theta_i$ d'après la formule (1) et que la sortie du dispositif à retard 17 délivre $\theta_{i-1}$.

Cette valeur $\theta_i$ est fournie à la première entrée du soustracteur 18 dont la deuxième entrée est couplée à la borne 101.

Le résultat de la comparaison effectuée par le comparateur 21 entre la valeur $d_p$ de la distorsion présente dans la table et la valeur estimée $\tilde{d}_p$ de la distorsion de la phase reçue, permet de commander un ensemble de compteurs-décompteurs 22. A cet effet, la sortie de ce comparateur 21 est reliée à l'entrée de cet ensemble 22 qui comprend quatre compteurs-décompteurs $C_p$ respectivement associés aux quatre valeurs du couple $(a_{i-1}, a_i)$. Une sortie 203 de la mémoire 20 reliée à une entrée de commande de cet ensemble, délivre un signal de commande d'incrémentation ou de décrémentation du compteur associé à la valeur du couple $(a_{i-1}, a_i)$.

La mémoire 20 possède une entrée de validation qui reçoit par une borne d'entrée 104 le signal logique $D_i = 0$, quand la valeur $a_i$ n'est pas douteuse. La mémoire 20 est alors validée pour mémoriser et restituer sur sa sortie 203 la valeur du couple $(a_i, a_{i-1})$, qui est utilisée pour valider un des compteurs-décompteurs 22. Si $D_i = 1$, la distorsion étant trop importante, le fonctionnement des compteurs-décompteurs est inhibé.

Lorsque $\tilde{d}_p$ est supérieure à $d_p$, le compteur associé à la valeur du couple $(a_i, a_{i-1})$ est incrémenté ;

6

ce compteur est décrémenté lorsque $\hat{d}_p$ est inférieure à $d_p$ et est inchangé lorsque $\hat{d}_p$ est égale à $d_p$. Le comptage-décomptage des valeurs du signal logique fourni par la comparaison de $\hat{d}_p$ et $d_p$ a pour effet de moyenner les écarts entre les valeurs de distorsion observées successivement pour une même valeur du couple $(a_i, a_{i-1})$. L'incrémentation des valeurs de distorsion $d_p$ par des pas de valeur constante, quel que soit l'écart à corriger, améliorer encore le filtrage des variations de la distorsion.

La sortie de l'ensemble des compteurs-décompteurs 22 est reliée à une entrée 204 de la mémoire. Ainsi, tous les mT unités de temps (m entier, par exemple m = 100) la mémoire 20 stocke les contenus $r_p$ des compteurs $C_p$. La mémoire 24 est couplée à la mémoire 20 comme indiqué ci-dessus, de façon à avoir accès aux valeurs $d_p$ et $r_p$ mémorisées dans la mémoire 20.

La mémoire 24, l'ensemble des compteurs-décompteurs 22 et un ensemble de circuits constitué de deux comparateurs 25 et 26, de deux portes ET, 29 et 30, d'un additionneur-soustracteur 27, d'un aiguillage 28 à une voie et deux positions, et d'un circuit de comptage 23, forment un ensemble d'éléments de comptage et de comparaison 900 permettant de modifier les valeurs $d_p$ de la table de distorsion. Pour cela, les premières entrées des comparateurs 25 et 26 sont reliées à une première sortie de la mémoire 24 sur laquelle sont disponibles les valeurs $r_p$. La seconde entrée du compensateur 25 reçoit une valeur de seuil 0 et la seconde entrée du comparateur 26 reçoit une valeur de seuil $\xi$.

Ainsi, chacune des valeurs $r_p$ est comparée à la valeur 0 par le comparateur 25 et à la valeur de seuil $\xi$ par le comparateur 26, $\pm \xi$ correspond à la tolérance acceptée pour décider de l'égalité de $\hat{d}_p$ et $d_p$. Les sorties 205 et 206 du comparateur 25 et les sorties 207 et 208 du comparateur 26 fournissent un signal de commande lorsque la valeur $r_p$ présente sur l'entrée commune des comparateurs est respectivement inférieure à zéro, supérieure à zéro, supérieure en valeur absolue à $\xi$, et inférieure en valeur absolue à $\xi$. La porte ET, 30, dont les entrées ont reliées à la sortie 206 du comparateur 25 et à la sortie 207 du comparateur 26 fournit un signal de commande d'addition à l'additionneur-soustracteur 27 lorsque la valeur analysée est supérieure à zéro et à $\xi$. La porte ET, 29, dont les entrées sont r    ues à la sortie 205 du comparateur 25 et à la sortie 207 du comparateur 26, fournit un signal de commande de soustraction à l'additionneur-soustracteur 27 lorsque la valeur analysée est négative et inférieure à $-\xi$. Suivant le signal de commande reçu, l'additionneur-soustracteur 27, qui comporte une entrée de signal reliée à la sortie 209 de la mémoire 24 sur laquelle sont disponibles les valeurs $d_p$, additionne ou soustrait à la valeur $d_p$ lue dans la mémoire 24 une valeur de correction $\varphi_p$. La nouvelle valeur $d_p \pm \varphi_p$ disponible sur la sortie de l'additionneur-soustracteur 27 est ensuite fournie à l'entrée 210 de la mémoire 24, à travers l'aiguillage 28 mis dans sa première position, pour être mémorisée dans la mémoire 24 à la place de la valeur $d_p$. Dans le cas où la valeur $r_p$ analysée est en valeur absolue inférieure à $\xi$, la sortie de l'additionneur-soustracteur 27 ne délivre aucun signal, l'aiguillage 28 dont l'entrée de commande est reliée à la sortie 208 du comparateur 26, est commuté dans sa deuxième position et fournit à l'entrée 210 de la mémoire 24 la valeur $d_p$ afin que cette valeur soit à nouveau mémorisée.

La commande de remise à jour de la table de distorsion est générée tous les mT, par un compteur 23 dont l'entrée est couplée à la sortie 109 du diviseur 52 (figure 2), qui fournit un signal d'horloge de période T.

Les valeurs de la table de distorsion mémorisées dans les mémoires 20 et 24 sont lors de chaque remise à jour transférées à l'entrée 103 des moyens 13 d'estimation de la valeur de bit.

Quand une valeur de phase $\varphi_i$ est reçue avec une distorsion importante, la variation de phase $\Delta\varphi_i = \varphi_i - \varphi_{i-1}$ est trop différente de $\pi/2$ pour que la décision sur la valeur de bit soit certaine. La valeur de bit $a_i$ fournie par le comparateur 7 est douteuse. Le comparateur 11 fournit un signal logique $D_i$, égal à 1 par exemple, indiquant que l'estimation $a_i$ est douteuse. Les moyens 13 d'estimation de la valeur de bit la plus probablement transmise déterminent alors une valeur de bit $a'_i$ estimée en tenant compte des valeurs de distorsion stockées en mémoire.

La figure 4 représente un mode de réalisation des moyens d'estimation 13 de la valeur de bit la plus probablement transmise. Il est constitué d'un dispositif de calcul 132 couplé à une mémoire 131. Le dispositif de calcul 132 est relié à une borne d'entrée 107 recevant le signal logique $D_i$ ; à une borne d'entrée 119 recevant la valeur de phase $\varphi_i$ fournie par les moyens de détermination de la phase 600 ; à une borne d'entrée 118 recevant la valeur de bit $a_i$ fournie par les moyens de détermination 700 ; et à une borne d'entrée 106 recevant la valeur $\Delta\varphi_i$ de variation de phase fournie par le soustracteur 6. La mémoire 131 stocke les valeurs de distorsion $d_p$ fournies par les moyens d'estimation de la distorsion 12 et transmises par une borne d'entrée 103. Les moyens de calcul 132 fournissent sur une borne de sortie 84 la valeur de bit $a'_i$ estimée la plus probable. L'estimation de cette valeur la plus probable d'un bit est faite selon l'algorithme suivant :

Les valeurs $D_i$, $\varphi_i$, $a_i$, $\Delta\varphi_i$ transitent par le dispositif de calcul 132 et sont mises en mémoire. Les valeurs correspondant aux dix derniers bits reçus sont disponibles ainsi pour évaluer les valeurs des bits douteux. Les bits dont la valeur est douteuse sont, en général, isolés parmi les bits de valeur certaine, néanmoins il peut arriver que plusieurs bits successifs soient de valeur douteuse. Le dispositif de calcul 132, recherche, parmi les dix bits, celui dont la valeur $a_i$ est la plus douteuse, en déterminant celui pour lequel la distorsion de phase :

$$\left| \frac{\pi}{2} - | \phi_i - \phi_{i-1} | \right|$$

est la plus grande. Par exemple, le bit le plus douteux est celui de rang i. L'estimation de la valeur la plus probable $a'_i$ est faite en considérant comme certaine la valeur $a_{i-1}$ du bit précédent, même si ce n'est pas vrai.

Soit $\theta_i$ la valeur de phase théorique qui serait reçue en l'absence de distorsion, pour le bit de rang i et $\theta_{i-1}$ pour le bit de rang i − 1. Celui-ci étant supposé connu de façon certaine, ainsi que les bits précédents, la valeur de phase théorique $\theta_{i-1}$ est connue. Le dispositif de calcul 132 détermine les deux valeurs possibles de $\theta_i$, en fonction des deux valeurs $b_i$ possibles du $i^{ème}$ bit transmis et qui est à déterminer :

$$\theta_i(-1) = \theta_{i-1} - \frac{\pi}{2}$$

$$\theta_i(+1) = \theta_{i-1} + \frac{\pi}{2}.$$

Le dispositif de calcul 132, corrige la valeur de phase reçue $\varphi_i$, en lui additionnant une valeur de distorsion lue dans la mémoire 131. Il y a quatre valeurs $d_p$ de distorsion possibles, selon la valeur du couple de bits transmis $(b_{i-1}, b_i)$. La valeur $b_{i-1}$ est connue par $a_{i-1}$ qui est supposée non douteuse. Il y a donc deux valeurs possibles pour la distorsion :

$$d_p(a_{i-1}, +1) \quad \text{et} \quad d_p(a_{i-1}, -1).$$

Les moyens de calcul 132 déterminent les deux valeurs possibles pour la phase corrigée, selon la formule :

$$\phi'_i(a_{i-1}, b_i) = \phi_i + d_p(a_{i-1}, b_i).$$

Puis le dispositif de calcul 132 calcule :

$$E = \phi'_i(a_{i-1}, b_i) - \theta_i(b_i),$$

dans les deux cas possibles :

$$E = \phi'_i(a_{i-1}, -1) - \theta_i(-1)$$

$$E = \phi'_i(a_{i-1}, +1) - \theta_i(+1).$$

Le cas où la valeur absolue de E est la plus faible détermine la valeur la plus probable $a'_i$ du bit transmis $b_i$, ainsi que la valeur de phase théorique $\theta_i$ qui lui correspond. Le dispositif de calcul 132 stocke alors, dans la mémoire 131, la valeur $a'_i$ à la place de $a_i$.

Le dispositif de calcul recherche ensuite le bit le plus douteux parmi les autres bits du lot de dix bits. Quand toutes les valeurs douteuses ont été remplacées par des valeurs plus probables, le dispositif de calcul recommence cette succession d'opérations. Si la valeur $a_{i-1}$ a été changée une nouvelle détermination de $a_i$ peut donner un nouveau résultat. Cette nouvelle valeur $a''_i$ est considérée comme meilleure et est conservée si

$$\left| \phi'_i(a_{i-1}, a''_i) - \theta_i(a''_i) \right| < \left| \phi'_i(a_{i-1}, a'_i) - \theta_i(a'_i) \right|,$$

sinon la valeur $a'_i$ est conservée comme valeur la plus probable.

Quand un lot de dix bits ne comporte plus de bits douteux, un autre lot de dix bits est traité ensuite. Pendant que le dispositif de calcul 132 traite un lot de dix bits contenant au moins un bit douteux, les bits non douteux sont acheminés à travers le dispositif à retard 83, de retard n.T qui laisse un temps n.T aux moyens de calcul 132 pour estimer la valeur la plus probable des bits douteux.

Une variante du mode de réalisation consiste à supprimer les moyens de sélection 80 et les dispositifs à retard 82 et 83. Dans ce cas, la sortie 84 des moyens d'estimation de la valeur de bit constitue la sortie du démodulateur. Cette simplification du dispositif a alors pour conséquence un alourdissement du travail du dispositif de calcul 132, qui doit acheminer les dits certains en plus de traiter les bits douteux.

La valeur de phase théorique $\theta_i$, calculée par la formule

$$\theta_i = \theta_{i-1} + a_i \times \frac{\pi}{2},$$

quand la valeur $a_i$ est certaine, n'est exacte que pendant un temps limité, ne serait ce qu'à cause des dérives de l'oscillateur 51. Il est donc nécessaire d'effectuer périodiquement un recalage des valeurs de phase théoriques, par exemple avec une période R = 1 000 × T. Cette période dépend de la stabilité du canal de transmission. A la fin de chaque période de durée R, le dispositif de calcul 132 calcule :

**0 045 260**

$$S = \sum_{i=1}^{1000} (\phi_i - \theta_i) \, ,$$

somme, pour les 1 000 derniers bits reçus, des écarts entre la phase reçue et la phase théorique ; et si |S| dépasse un certain seuil, il modifie la valeur des phases théoriques ultérieures en les décalant toutes d'une valeur constante, positive ou négative, selon le signe de la somme calculée, de façon à ce que la somme calculée pendant la période R suivante soit plus faible en valeur absolue.

L'invention n'est pas limitée au mode de réalisation décrit et représenté, de nombreuses variantes de réalisation sont possibles. Le traitement pour la détermination des valeurs de plusieurs bits douteux successifs peut aussi être réalisée par l'algorithme de Viterbi, décrit dans : Proceedings of the IEEE volume 61, n° 3, mars 1973, pages 268 à 278.

En particulier, le principe de démodulation qui vient d'être décrit peut être facilement mis en oeuvre à l'aide d'un ordinateur.

La combinaison de l'échantillonnage de phase sans calcul de corrélation et de la correction des distorsions de phase par des données mémorisées caractéristiques de ces distorsions, est un traitement simple nécessitant peu de calculs tout en ayant une efficacité plus grande que la démodulation adaptée. Pour un même rapport signal sur bruit à l'entrée du démodulateur le taux d'erreur est inférieur.

L'échantillonnage de la phase et l'asservissement de la fréquence de l'horloge peuvent être réalisés selon d'autres procédés connus.


**Revendications**

1. Démodulateur de signaux modulés suivant une modulation de phase continue pour la transmission, à un rythme F, de données binaires, caractérisé en ce qu'il comporte :
— des moyens (600) de détermination et d'échantillonnage de la phase du signal modulé ;
— des moyens (700) de détermination d'une valeur ($a_i$) d'un bit d'après les valeurs de la phase de deux échantillons successifs ;
— des moyens (13) d'estimation de la valeur de bit ($a'_i$) la plus probablement transmise, en fonction des valeurs de phase des deux échantillons successifs ($\varphi_{i-1}$, $\varphi_i$) reçues pour ce bit, ces valeurs de phase étant corrigées à l'aide de données mémorisées caractéristiques des effets moyens de la distorsion sur la phase correspondant aux séquences de p bits (p entier, fixé, supérieur ou égal à 2) dont le premier bit est constitué par le bit précédent ($a_{i-1}$) ;
— des moyens (12) d'estimation de ces données caractéristiques, déterminant pour chaque échantillon la différence entre la phase ($\varphi_i$) déterminée par les moyens (600) de détermination et d'échantillonnage de la phase du signal modulé et une phase théorique ($\theta_i$) calculée à partir de la phase théorique ($\theta_{i-1}$) calculée pour l'échantillon précédent et à partir de la valeur ($a_{i-1}$) du bit précédent, cette dernière étant déterminée par les moyens (700) de détermination de la valeur d'un bit, d'après les valeurs de la phase de deux échantillons successifs, lesdits moyens estimant, à partir des valeurs de distorsion ainsi déterminées, des données caractéristiques des effets moyens de la distorsion sur la phase pour toutes les séquences de p bits possibles, et mettant en mémoire ces données caractéristiques.

2. Démodulateur selon la revendication 1, caractérisé en ce que les moyens (600) de détermination et d'échantillonnage de la phase comportent un comparateur de phase (2), recevant sur une première entrée le signal à démoduler et sur une deuxième entrée un signal de référence fourni par oscillateur (51) ; un échantillonneur (3) échantillonnant le signal fourni par le comparateur de phase et le transmettant à un convertisseur analogique-numérique (4), à un rythme K.F. (K entier, supérieur à 1) défini par un circuit d'horloge (9) asservi par des moyens d'asservissement (8) pour être synchronisé sur la fréquence des bits ; une porte (5) transmettant, à un rythme F et sous la commande d'un signal fourni par les moyens d'asservissement (8), des valeurs numériques de phase délivrées par le convertisseur (4).

3. Démodulateur selon la revendication 2, caractérisé en ce que le circuit d'horloge (9) délivre à l'échantillonneur (3) et au convertisseur (4) un signal à la fréquence 2F et en ce que les moyens d'asservissement (8) commandent la porte (5) pour ne laisser passer que les valeurs correspondant aux échantillons pris aux extrémités des intervalles de temps associés aux bits transmis.

4. Démodulateur selon la revendication 3, caractérisé en ce que les moyens d'asservissement (8) comportent : un dispositif à retard (71) de retard T/2 (avec T = 1/F) ayant une entrée couplée à la sortie du convertisseur (4) ; un premier soustracteur (72) ayant des premières et deuxième entrées respectivement couplées à l'entrée et à la sortie du dispositif à retard (71), et une sortie fournissant, suivant la fréquence 2F, la variation de phase d'un échantillon à un autre ; un aiguillage à deux positions (44) ayant une entrée couplée à la sortie du premier soustracteur (72), et des première et deuxième sorties délivrant alternativement, à la fréquence F, les valeurs fournies par le premier soustracteur (72) ; un premier comparateur (45) relié à un premier compteur (46) pour compter le nombre de valeurs supérieures à un seuil déterminé S, parmi celles délivrées par la première sortie de l'aiguillage (44) ; un deuxième comparateur (48) relié à un deuxième compteur (47) pour compter le nombre de valeurs supérieures au seuil S, parmi celles délivrées par la deuxième sortie de l'aiguillage (44) ; un deuxième soustracteur (49) pour soustraire les deux nombres ainsi comptés ; un troisième comparateur (50) pour délivrer un signal logique, quand l'écart entre ces deux nombres est inférieur à un seuil $S_1$, et le fournir à une borne de sortie (110) connectée à une entrée de circuit d'horloge (9) afin de commander le décalage de sa fréquence ; un diviseur de fréquence par deux (52) ayant une entrée (105) couplée à la sortie du circuit d'horloge (9) et une entrée d'initialisation ; et un dispositif de traitement (53) ayant une entrée couplée à la sortie du premier soustracteur (72), une entrée de validation destinée à recevoir le signal fourni par le troisième comparateur (50), et une sortie fournissant à l'entrée de validation du diviseur (52) une impulsion d'initialisation dès qu'un changement de signe est détecté dans la valeur fournie par le premier soustracteur 72, si l'entrée de validation est activée.

5. Démodulateur selon l'une quelconque des revendications 1, 2, 3 ou 4, caractérisé en ce que les moyens (12) d'estimation des données caractéristiques des effets de la distorsion comportent : un dispositif à retard (19), de retard T, ayant une entrée (100) couplée à la sortie des moyens de détermination (700) de la valeur de bit reçu ; une mémoire (20) ayant des première et deuxième entrées respectivement couplées à l'entrée et à la sortie du dispositif à retard (19) ; un dispositif de calcul (15, 16 et 17) pour calculer une valeur théorique $\theta_i$ de la phase du signal, couplé par son entrée (100) à la sortie des moyens de détermination (700) de la valeur de bit reçu ; un dispositif de détermination (18) d'une valeur de distorsion $\hat{d}_p$ ayant une première entrée (101) couplée à la sortie des moyens (600) de détermination et d'échantillonnage de la phase et une deuxième entrée couplée à la sortie du dispositif de calcul (15, 16 et 17) ; un dispositif de comparaison (21) de la valeur $\hat{d}_p$ et de la valeur de distorsion $d_p$ contenue dans la mémoire (20) ; et un ensemble d'éléments de comptage et de comparaison (900) couplé à la mémoire (20) et destiné à mettre à jour la table des valeurs de distorsion en fonction de la comparaison effectuée par le dispositif de comparaison (21).

6. Démodulateur selon la revendication 5, caractérisé en ce que le dispositif de calcul pour calculer une valeur théorique $\theta_i$ de la phase du signal comporte : un circuit de multiplication (15) ayant une entrée couplée à la sortie des moyens de détermination (700) de la valeur de bit reçu $a_i$ et effectuant le produit $a_i \times \pi/2$ ; un additionneur (16) ayant une première entrée couplée à la sortie du circuit de multiplication (15) ; et un dispositif à retard (17), de retard T, ayant une entrée couplée à la sortie de l'additionneur (16) et une sortie couplée à la deuxième entrée de l'additionneur (16).

7. Démodulateur selon la revendication 5, caractérisé en ce que l'ensemble d'éléments de comptage et de comparaison (900) comporte : une seconde mémoire (24) couplée à la mémoire (20) ; des moyens (12) d'estimation des données caractéristiques ; un ensemble (22) de compteurs-décompteurs, où chacun a une entrée de validation et une sortie reliée à la mémoire (20), et où chacun a une entrée de commande de comptage-décomptage reliée à la sortie du comparateur (21), pour permettre un comptage lorsque $\hat{d}_p > d_p$ et un décomptage dans le cas contraire ; un quatrième et un cinquième comparateur (25 et 26) ayant une entrée commune recevant une valeur $r_p$ fournie par une première sortie de la seconde mémoire (24) de l'ensemble d'éléments de comptage et de comparaison (900), ayant chacun une entrée recevant une valeur de seuil, respectivement égale à 0 et $\xi$, et ayant chacun une première sortie fournissant un signal logique respectivement si $r_p > 0$ et si $|r_p| > \xi$, et une deuxième sortie fournissant un signal logique dans le cas contraire ; un additionneur-soustracteur (27) ayant une entrée de commande d'addition reliée à la sortie d'une porte ET (30) à deux entrées connectées respectivement à la première sortie du quatrième comparateur (25) et à la première sortie du cinquième comparateur (26), une entrée de commande de soustraction reliée à la sortie d'une porte ET (29) à deux entrées connectées respectivement à la deuxième sortie du quatrième comparateur (25) et à la première sortie du cinquième comparateur (26), deux entrées de données recevant respectivement une valeur $d_p$ fournie par une deuxième sortie de la mémoire (24) de l'ensemble d'éléments de comptage et de comparaison (900) et une valeur $\delta_p$ fixe, et une sortie fournissant soit $d_p + \delta_p$ soit $d_p - \delta_p$ selon l'état des entrées de commande ; un aiguillage (28) à deux positions, ayant une entrée de commande reliée à la deuxième sortie du cinquième comparateur (26), une première entrée recevant la valeur $d_p$ fournie par la deuxième sortie de la mémoire (24) de l'ensemble de comptage et de comparaison (900), une deuxième entrée recevant la valeur $d_p \pm \delta_p$ fournie par la sortie de l'additionneur-soustracteur (27), et une sortie transmettant les données présentes sur sa première entrée si $|r_p| > \xi$, et les données présentes sur sa deuxième entrée si $|r_p| \leqslant \xi$ ; un compteur (23) ayant une entrée d'horloge recevant un signal de fréquence F et une sortie fournissant un signal de fréquence F/m validant la mémoire (24) (m, entier positif).

8. Démodulateur selon l'une quelconque des revendications 1 à 7, caractérisé en ce que les moyens (13) d'estimation de la valeur de bit la plus probablement transmise comportent un dispositif de calcul (132) couplé à une mémoire (131), couplé à la sortie des moyens (600) de détermination et d'échantillonnage de la phase, et couplé à la sortie des moyens (700) de détermination de la valeur d'un bit ; une borne d'entrée (103) reliant une entrée de la mémoire (131) à la sortie des moyens (12) d'estimation de la distorsion de phase, pour transmettre les valeurs de distorsion $d_p$ ; une borne de sortie (84), fournissant une valeur $a'_i$ qui est la valeur la plus probablement transmises par le $i^{ème}$ bit et qui est déterminée selon un algorithme consistant :

— à lire dans la mémoire (131) les quatre valeurs de distorsion $d_p$ ($a_{i-1}$, $b_i$, $b_{i+1}$) dont les adresses sont données par les quatre valeurs possibles de ($b_i$, $b_{i+1}$), où $b_i$, $b_{i+1}$ sont les valeurs possibles des $i^{ème}$

et i + 1$^{ème}$ bits, associées à la valeur $a_{i-1}$ du i − 1$^{ème}$ bit, fournie par les moyens (700) de détermination de la valeur d'un bit ;

— à calculer quatre valeurs de phase corrigée selon la formule :

$$\phi_i'(a_{i-1}, b_i, b_{i+1}) = \phi_i + d_p(a_{i-1}, b_i, b_{i+1})$$

— à calculer les quatre valeurs correspondantes de l'expression

$$E = \phi_i'(a_{i-1}, b_i, b_{i+1}) - \theta_i(b_i) \text{ où } \theta_i(b_i)$$

est la valeur de phase qui serait théoriquement reçue pour un bit transmis de valeur $b_i$ ;

— à déterminer pour quelle valeur de $b_i$ la valeur absolue |E| est la plus petite ;

— à considérer que cette valeur $b_i$ est la valeur la plus probablement transmise, $a_i'$, pour le $i^{ème}$ bit.

9. Démodulateur selon la revendication 8, caractérisé en ce que l'algorithme mis en oeuvre par le dispositif de calcul (132) consiste en outre, lorsque plusieurs bits successifs ont une valeur douteuse :

— à rechercher au préalable, parmi la suite de bits douteux successifs, lequel est le plus douteux en déterminant celui pour lequel la valeur de l'expression :

$$\left| \frac{\pi}{2} - | \phi_i - \phi_{i-1} | \right|$$

est maximale.

— à chercher la valeur la plus probablement transmise pour ce bit, par l'algorithme décrit dans la revendication 8 ;

— à chercher ensuite le bit le plus douteux parmi les bits douteux restant dans la suite ;

— à recommencer jusqu'à ce qu'il ait plus de bits douteux dans la suite ;

— à recalculer $a_i''$ une deuxième valeur la plus probable pour chaque bit douteux dont le bit précédent a changé de valeur $a_{i-1}$ à la suite d'un calcul de sa valeur la plus probable $a_{i-1}'$ ;

— conserver cette deuxième valeur $a_i''$ si

$$\left| \phi'(a_{i-1}, a_i'', a_{i+1}) - \theta_i(a_i'') \right| < \left| \phi_i'(a_{i-1}, a_i', a_{i+1}) - \theta_i(a_i') \right|.$$

10. Démodulateur selon l'une quelconque des revendications 1 à 8, caractérisé en ce qu'il comporte des moyens de décision (11) pour générer, si la détermination de la valeur $a_i$ d'un bit est douteuse, un signal logique $D_i$ et le fournir aux moyens (12) d'estimation de la distorsion, aux moyens (13) d'estimation de la valeur de bit la plus probablement transmise, et à un premier dispositif à retard (82), qui le retarde de n.T ; un deuxième dispositif à retard (83) recevant et retardant de n.T la valeur $a_i$ d'un bit fournie par les moyens de détermination (700) ; des moyens de sélection (80) ayant une première entrée reliée à la sortie des moyens (13) d'estimation de la valeur de bit la plus probable, une deuxième entrée reliée à la sortie du deuxième dispositif à retard (83), une entrée de commande reliée à la sortie du premier dispositif à retard (82) et une sortie, constituant la sortie du démodulateur, qui transmet soit les données présentes à sa première entrée soit les données présentes à sa deuxième entrée selon la valeur du signal logique $D_i$ appliqué sur l'entrée de commande, de telle façon que les valeurs de bit $a_i$ non douteuses sont acheminées vers la sortie du démodulateur, sans être traitées par les moyens d'estimation (13) de la valeur de bit la plus probablement transmises ; et en ce que n est choisi tel que n.T est égal au temps de calcul de ces moyens d'estimation (13).

11. Système de transmission, caractérisé en ce qu'il comporte un démodulateur selon l'une des revendications 1 à 9.

## Claims

1. Demodulator of signals modulated in accordance with a continuous phase modulation for the transmission of binary data at a rhythm F, characterized in that it comprises :

— means (600) for the determination and sampling of the phase of the modulated signal ;

— means (700) for the determination of a value ($a_i$) of a bit from the phase values of two successive samples ;

— means (13) for estimation of the value of the bit ($a_i'$) that has been most probably transmitted, as a function of the phase values of two successive samples ($\phi_{i-1}$, $\phi_i$) received for this bit, these phase values being corrected by means of stored data being characteristic of the average effects of the distortion on the phase corresponding to sequences of p bits (p being a fixed integer equal to or exceeding 2) the first bit of which is formed by the preceding bit ($a_{i-1}$) ;

— means (12) for the estimation of these characteristic data, and determining for each sample the difference between the phase ($\phi_i$) determined by the means (600) for the determination and sampling of the phase of the modulated signal and a theoretical phase ($\theta_i$) computed from the theoretical phase ($\theta_{i-1}$) computed for the preceding sampling and from the value ($a_{i-1}$) of the preceding bit, the latter being determined by the means (700) for the determination of the value of a bit, from the phase values of two successive samples, said means estimating, from the thus determined distortion values, data which are characteristic of the average effects of the distortion on the phase for all possible sequences of p bits, and storing these characteristic data.

2. Demodulator according to claim 1, characterized in that the means (600) for the determination and sampling of the phase comprise a phase comparator (2) receiving on a first input the signal to be demodulated and on a second input a reference signal supplied by an oscillator (51) ; a sampler (3) sampling the signal supplied by the phase comparator and transmitting the same to an analog-digital converter (4) at a rhythm K.F (K integer and exceeding 1) defined by a clock circuit (9) controlled by control means (8) in order to be synchronized with the frequency of the bits ; a gate (5) transmitting, at a rhythm F and under control of a signal supplied by the control means (8), digital phase values supplied by the converter (4).

3. Demodulator according to claim 2, characterized in that the clock circuit (9) supplies to the sampler (3) and to the converter (4) a signal of the frequency 2F, and in that the control means (8) control the gate (5) in order to transmit only the values corresponding to the samples taken at the ends of time intervals associated with the transmitted bits.

4. Demodulator according to claim 3, characterized in that the control means (8) comprise : a delay device (71) having the delay T/2 (with T = 1/F) having an input coupled to the output of the converter (4) ; a first subtractor (72) having first and second inputs coupled to the input and to the output, respectively, of the delay device (71) and an output supplying at the frequency 2F the phase variation from one sample to another ; a two position changeover switch (44) having a first input coupled to the output of the first subtractor (72) and first and second outputs alternatingly supplying at the frequency F the values supplied by the first subtractor (72) ; a first comparator (45) connected to a first counter (46) for counting the number of values exceeding a determined threshold S among those supplied by the first output of the switch (44) ; a second comparator (48) connected to a second counter (47) for counting the number of values exceeding the threshold S among those supplied by the second output of the switch (44) ; a second subtractor (49) for subtracting the two thus counted numbers ; a third comparator (50) for supplying a logic signal when the difference between these two numbers is inferior to a threshold $S_1$ and for supplying the same to an output terminal (110) connected to an input of the clock circuit (9) for controlling its frequency shift ; a frequency divider by two (52) having an input (105) coupled to the output of the clock circuit (9) and an initialization input ; and a processing device (53) having an input coupled to the output of the first subtractor (72), an enabling input for receiving the signal supplied by the third comparator (50) and an output supplying to the enabling input of the divider (52) an initialization pulse as soon as a sign change is detected in the value supplied by the first subtractor (72) when the enabling input is activated.

5. Demodulator according to any of claims 1, 2, 3 and 4, characterized in that the means (12) for the estimation of the data which are characteristic of the effects of the distortion comprise : a delay device (19) having the delay T and an input (100) coupled to the output of the means (700) for the determination of the value of a received bit ; a memory (20) having first and second inputs coupled to the input and the output, respectively, of the delay device (19) ; a computing device (15, 16 and 17) for computing a theoretical value $\theta_i$ of the phase of the signal, having its input (100) coupled to the output of the means (700) for the determination of the value of the received bit ; a device (18) for the determination of a distortion value $\hat{d}_p$ having a first input (101) coupled to the output of the means (600) for the determination and sampling of the phase and a second input coupled to the output of the computing device (15, 16 and 17) ; a comparing device (21) for comparing the value $\hat{d}_p$ and the distortion value $d_p$ contained in the memory (20) ; and a set of counting and comparing elements (900) coupled to the memory (20) and adapted to refresh the table of the distortion values as a function of the comparison performed by the comparing device (21).

6. Demodulator according to claim 5, characterized in that the computing device for computing a theoretical value $\theta_i$ of the signal phase comprises : a multiplying circuit (15) having one input coupled to the output of the means (700) for the determination of the received bit value $a_i$ and forming the product $a_i \times \pi/2$ ; an adder (16) having a first input coupled to the output of the multiplying circuit (15) ; and a delay device (17) having the delay T and having an input coupled to the output of the adder (16) and an output coupled to be second input of the adder (16).

7. Demodulator according to claim 5, characterized in that the set of counting and comparing elements (900) comprises : a second memory (24) coupled to the memory (20) ; means (12) for the estimation of characteristic data ; a set (22) of up/down counters each of which has an enabling input and an output connected to the memory (20) and each of which has an up/down counting control input connected to the output of the comparator (21) for enabling an upward counting when $\hat{d}_p > d_p$ and for enabling a downward counting in the contrary case ; a fourth and a fifth comparator (25 and 26) having a common input receiving a value $r_p$ supplied by a first output of the second memory (24) of the set of counting and comparing elements (900), and each having an input receiving a threshold value equal to 0 and $\xi$, respectively, and each having an output supplying a logic signal when $r_p > 0$ and when $|r_p| > \xi$, respectively, and a second output supplying a logic signal in the contrary case ; an adder-subtractor (27) having an adding control input connected to the output of a AND gate (30) and two inputs connected to the first output of the fourth comparator (25) and two the first output of the fifth comparator (26), respectively, a subtracting control input connected to the output of an AND gate (29) having two inputs connected to the second output of the fourth comparator (25) and to the first output of the fifth comparator (26), respectively, two data inputs receiving a value $d_p$ supplied by a second output of the memory (24) of the set of counting and comparing elements (900) and a fixed value $\delta_p$, respectively, and an output supplying either $d_p + \delta_p$ or $d_p - \delta_p$, depending on the state of the control inputs ; a two position changeover switch (28) having a control input connected to the second output of the fifth comparator (26), a first input receiving the value $d_p$ supplied by a second output of the memory (24) of the set of counting and comparing elements (900), a second input receiving the value $d_p \pm \delta_p$ supplied by the output of the adder-subtractor (27), and an output transmitting the data presented on its first input if $|r_p| > \xi$ and the data presented on its second input if $|r_p| \leqslant \xi$ ; a counter (23) having a clock input receiving a signal of the frequency F and an output supplying a signal of the frequency F/m enabling the memory (24) (m positive integer).

8. Demodulator according to any of claims 1 to 7, characterized in that the means (13) for the estimation of the value of the bit having most probably been transmitted comprises a computing device (132) coupled to a memory (131), coupled to the output of the means (600) for the determination and sampling of the phase, and coupled to the output of the means (700) for the determination of a bit value ; an input terminal (103) connecting an input of the memory (131) to the output of the means (12) for the estimation of the phase distortion, for transmitting the distortion values $d_p$ ; an output terminal (84) supplying a value $a'_i$ which is the value that has been most probably transmitted by the ith bit and which is determined in accordance with an algorithm consisting in :

— reading from the memory (131) the four distortion values $d_p$ $(a_{i-1}, b_i, b_{i+1})$ the addresses of which are given by the four possible values of $(b_i, b_{i+1})$, wherein $b_i$, $b_{i+1}$ are the possible values of the ith and of the i + 1th bits, associated with the value $a_{i-1}$ of the i − 1th bit, supplied by the means (700) for the determination of the value of a bit ;

— computing four corrected phase values from the formula :

$$\phi'_i(a_{i-1}, b_i, b_{i+1}) = \phi_i + d_p(a_{i-1}, b_i, b_{i+1})$$

— computing the four values corresponding to the expression

$$E = \phi'_i(a_{i-1}, b_i, b_{i+1}) - \theta_i(b_i) ,$$

wherein $\theta_i$ $(b_i)$ is the phase value which would be theoretically received for a transmitted bit of the value $b_i$ ;

— determining for which value $b_i$ the absolute value $|E|$ is the smallest one ;

— considering that this value $b_i$ is the value $a'_i$ which has been most probably transmitted for the ith bit.

9. Demodulator according to claim 8, characterized in that the algorithm used by the computing device (132), when a plurality of successive bits have a doubtful value, further consists in :

— previously searching among the sequence of successive doubtful bits which of them is the most doubtful one by determining that for which the value of the expression :

$$\left| \frac{\pi}{2} - |\phi_i - \phi_{i-1}| \right|$$

is maximum ;

— searching for the value which has been most probably transmitted for this bit by using the algorithm defined in claim 8 ;

— subsequently searching for the most doubtful bit among the doubtful bits remaining within the sequence ;

— repeating until there are no more doubtful bits in the sequence ;

— computing a new second value $a''_i$ having the highest probability for each doubtful bit the preceding bit of which has changed its value $a_{i-1}$ following a computation of its most probable value $a'_{i-1}$ ;

— saving this second value $a''_i$ if

$$\left| \phi'(a_{i-1}, a''_i, a_{i+1}) - \theta_i(a''_i) \right| < \left| \phi'_i(a_{i-1}, a'_i, a_{i+1}) - \theta_i(a'_i) \right| .$$

10. Demodulator according to any of claims 1 to 8, characterized in that it comprises decision means (11) for generating, if the determination of the value $a_i$ of a bit is doubtful, a logic signal $D_i$ and supplying the same to the distortion estimation means (12), to the means (13) for the estimation of the bit value which has been most probably transmitted, and to a first delay device (82) delaying the same by n. T. ; a second delay device (83) receiving and delaying by n. T. value $a_i$ of a bit supplied by the determination means (700) ; selection means (80) having a first input connected to the output of the means (13) for the estimation of the most probable bit value, a second input connected to the output of the second delay device (83), a control input connected to the output of the first delay device (82), and an output forming the output of the demodulator and transmitting either the data presented to its first input or the data presented to its second input depending on the value of the logic signal $D_i$ applied to the control input, in such a manner that the undoubtful bit values $a_i$ are directed to the output of the demodulator without being processed by the means (13) for the estimation of the most probably transmitted bit value ; and in that n is chosen such that n. T. is equal to the computing time of these estimation means (13).

11. Transmission system, characterized in that it comprises a demodulator according to any of claims 1 to 9.

**Patentansprüche**

1. Demodulator für Signale, die mit kontinuierlicher Phasenmodulation moduliert sind, zur Übertragung von Binärdaten in einem Rhythmus F, dadurch gekennzeichnet, daß er umfaßt :
— Mittel (600) zur Bestimmung und Abtastung der Phase des modulierten Signals ;
— Mittel (700) zur Bestimmung eines Wertes ($a_i$) eines Bits aus den Phasenwerten von zwei aufeinanderfolgenden Abtastproben ;
— Mittel (13) zur Schätzung des Wertes des Bits ($a'_i$), der mit der größten Wahrscheinlichkeit übertragen wurde, in Abhängigkeit von den Phasenwerten der zwei aufeinanderfolgenden Abtastproben ($\phi_{i-1}$, $\phi_i$), die für dieses Bit empfangen wurden, wobei diese Phasenwerte korrigiert werden mittels gespeicherten Daten, die charakteristisch für die mittleren Auswirkungen der Verzerrung auf die Phase sind und welche den Sequenzen von p Bits (p ganzzahlig festgelegt und größer als oder gleich 2) entsprechen, wovon das erste Bit durch das vorausgehende Bit ($a_{i-1}$) gebildet ist ;
— Mittel (12) zur Abschätzung dieser charakteristischen Daten, welche für jede Abtastprobe die Differenz zwischen der durch die Bestimmungsmittel (600) und die Abtastung der Phase des modulierten Signals bestimmten Phase ($\phi_i$) und einer theoretischen Phase ($\theta_i$) bestimmen, die aus der theoretischen Phase ($\theta_{i-1}$) berechnet wurde, welche für die vorausgehende Abtastprobe und aus dem Wert ($a_{i-1}$) des vorausgehenden Bits berechnet wurde, wobei letzterer durch die Mittel (700) zur Bestimmung des Wertes eines Bits bestimmt wurden aus den Phasenwerten von zwei aufeinanderfolgenden Abtastproben, wobei die genannten Mittel aus den so bestimmten Verzerrungswerten Daten abschätzen, die charakteristisch für die mittleren Auswirkungen der Verzerrung auf die Phase bei allen möglichen Sequenzen von p Bits sind, und diese charakteristischen Daten abspeichern.

2. Demodulator nach Anspruch 1, dadurch gekennzeichnet, daß die Mittel (600) zur Bestimmung und zur Abtastung der Phase einen Phasenkomparator (2) enthalten, welcher an einem ersten Eingang das zu demodulierende Signal und an einem zweiten Eingang ein Referenzsignal empfängt, das von einem Oszillator (51) geliefert wird ; wobei ein Abtaster (3) das von dem Phasenkomparator gelieferte Signal abtastet und es zu einem Analog/Digital-Umsetzer (4) in einem Rhythmus K.F überträgt (K ganzzahlig und größer als 1), der durch eine Zeitbasisschaltung (9) bestimmt wird, welche durch eine Regeleinrichtung (8) nachgeregelt wird, um auf die Bitfrequenz synchronisiert zu werden ; wobei eine Torschaltung (5) in einem Rhythmus F und unter Steuerung durch ein Signal, welches durch die Regeleinrichtung (8) geliefert wird, digitale Phasenwerte überträgt, die von dem Umsetzer (4) abgegeben werden.

3. Demodulator nach Anspruch 2, dadurch gekennzeichnet, daß die Zeitbasisschaltung (9) an den Abtaster (3) und an den Umsetzer (4) ein Signal von der Frequenz 2F abgibt, und daß die Regeleinrichtung (8) die Torschaltung (5) so steuert, daß nur die Werte durchgelassen werden, welche den Abtastproben entsprechen, die an den Enden der Zeitintervalle abgenommen wurden, welche den übertragenen Bits zugeordnet sind.

4. Demodulator nach Anspruch 3, dadurch gekennzeichnet, daß die Regeleinrichtung (8) umfaßt : Eine Verzögerungsvorrichtung (71) von der Verzögerung T/2 (mit T = 1/F), die einen mit dem Ausgang des Umsetzers (4) verbundenen Eingang aufweist ; einen ersten Subtrahierer (72), dessen erster Eingang mit dem Eingang und dessen zweiter Eingang mit dem Ausgang der Verzögerungsvorrichtung (71) verbunden ist und dessen Ausgang mit der Frequenz 2F die Phasenänderung von einer Abtastprobe zu einer anderen liefert ; einen Umschalter (44) mit einem Eingang, welcher an den Ausgang des ersten Subtrahierers (72) angekoppelt ist und dessen erster und zweiter Ausgang abwechselnd mit der Frequenz F die Werte abgeben, welche von dem ersten Subtrahierer (72) geliefert werden ; einen ersten Komparator (45), der mit einem ersten Zähler (46) verbunden ist, um die Anzahl von Werten unter den vom ersten Ausgang des Umschalters (44) gelieferten Werten zu zählen, die größer als ein bestimmter Schwellwert S sind ; einen zweiten Komparator (48), der mit einem zweiten Zähler (47) verbunden ist, um die Anzahl von Werten unter den vom zweiten Ausgang des Umschalters (44) abgegebenen Werten zu zählen, die größer sind als der Schwellwert S ; einen zweiten Subtrahierer (49) zum Subtrahieren der zwei so gezählten Zahlen ; einen dritten Komparator (50) zum Abgeben eines logischen Signals, wenn die Abweichung zwischen diesen zwei Zahlen kleiner als ein Schwellwert $S_1$ ist, und es an einen Ausgangsanschluß (110) abzugeben, welcher mit einem Eingang der Zeitbasisschaltung (9) verbunden ist, um deren Frequenzverschiebung zu steuern ; einen durch zwei teilenden Frequenzteiler (52) mit einem Eingang (105), der an den Ausgang der Zeitbasisschaltung (9) angekoppelt ist, und einem Initiierungseingang ; und eine Verarbeitungsvorrichtung (53) mit einem Eingang, der an den Ausgang des ersten Subtrahierers (72) angekoppelt ist, einem Freigabeeingang zum Empfangen des von dem dritten Komparator (50) abgegebenen Signals und mit einem Ausgang, welcher an den Freigabeeingang des Teilers (52) einen Initiierungsimpuls abgibt, sobald eine Vorzeichenveränderung in dem Wert festgestellt wird, der von dem ersten Subtrahierer 72 geliefert wird, wenn der Freigabeeingang aktiviert ist.

5. Demodulator nach einem der Ansprüche 1, 2, 3 und 4, dadurch gekennzeichnet, daß die Mittel (12) zur Abschätzung der für die Auswirkungen der Verzerrung charakteristischen Daten umfassen : Eine Verzögerungsvorrichtung (19) mit der Verzögerung T, die einen an den Ausgang der Mittel (700) zur Bestimmung des Wertes des empfangenen Bits angekoppelten Eingang (100) aufweist ; einen Speicher (20), dessen erster Eingang mit dem Eingang und dessen zweiter Eingang mit dem Ausgang der Verzögerungsvorrichtung (19) verbunden ist ; eine Rechenvorrichtung (15, 16 und 17) zur Berechnung eines theoretischen Wertes $\theta_i$ der Signalphase, welche über ihren Eingang (100) mit dem Ausgang der Mittel (700) zur Bestimmung des Wertes des empfangenen Bits verbunden ist ; eine Vorrichtung (18) zur Bestimmung eines Verzerrungswertes $\hat{d}_p$, mit einem ersten Eingang (101), der an den Ausgang der Mittel (600) zur Bestimmung und Abtastung der Phase angekoppelt ist, und einem zweiten Eingang, der an den Ausgang der Rechenvorrichtung (15, 16 und 17) angekoppelt ist ; eine Komparatorvorrichtung (21) zum Vergleichen des Wertes $\hat{d}_p$ mit dem Verzerrungswert $d_p$, der in dem Speicher (20) enthalten ist ; und eine Gruppe von Zähler- und Komparatorelementen (900), die mit dem Speicher (20) gekoppelt und dazu bestimmt ist, die Tabelle der Verzerrungswerte aufzufrischen in Abhängigkeit von dem Vergleich, der durch die Komparatorvorrichtung (21) durchgeführt wird.

6. Demodulator nach Anspruch 5, dadurch gekennzeichnet, daß die Rechenvorrichtung zur Berechnung eines theoretischen Wertes $\theta_i$ der Phase des Signals umfaßt : Eine Multiplizierschaltung (15) mit einem Eingang, der an den Ausgang der Mittel (700) zur Bestimmung des Wertes des empfangenen Bits $a_i$ angekoppelt ist und welche das Produkt $a_i \times \pi/2$ bildet ; einen Addierer (16) mit einem ersten Eingang, der an den Ausgang der Multiplizierschaltung (15) angekoppelt ist ; und eine Verzögerungsvorrichtung (17) mit der Verzögerung T, deren Eingang an den Ausgang des Addierers (16) und deren Ausgang an den zweiten Eingang des Addierers (16) angekoppelt ist.

7. Demodulator nach Anspruch 5, dadurch gekennzeichnet, daß die Gruppe von Zähler- und Komparatorelementen (900) umfaßt : Einen zweiten Speicher (24), der an den Speicher (20) angekoppelt ist ; Mittel (12) zur Abschätzung der charakteristischen Daten ; eine Gruppe (22) von Aufwärts/Abwärts-Zählern, wovon jeder einen Freigabeeingang und einen Ausgang aufweist, der mit dem Speicher (20) verbunden ist, und wovon jeder einen Aufwärts/Abwärts-Zählung-Steuereingang aufweist, der mit dem Ausgang des Komparators (21) verbunden ist, um ein Aufwärtszählen zuzulassen, wenn $\hat{d}_p > d_p$, und im entgegengesetzten Fall ein Abwärtszählen zu ermöglichen ; einen vierten sowie einen fünften Komparator (25 und 26) mit einem gemeinsamen Eingang, der einen Wert $r_p$ empfängt, welcher von einem ersten Ausgang des zweiten Speichers (24) der Gruppe von Zähler- und Komparatorelementen (900) geliefert wird, und mit jeweils einem Eingang, welcher einen Schwellwert empfängt, von denen der erste gleich 0 und der zweite gleich $\xi$ ist, sowie jeweils mit einem ersten Ausgang, der ein logisches Signal liefert, wenn $r_p > 0$ bzw. wenn $|r_p| > \xi$, sowie mit einem zweiten Ausgang, der im entgegengesetzten Fall ein logisches Signal liefert ; einen Addierer-Subtrahierer (27) mit einem Addier-Steuereingang, der mit dem Ausgang einer AND-Torschaltung (30) verbunden ist, die zwei Eingänge aufweist, von denen der erste mit dem ersten Ausgang des vierten Komparators (25) und der zweite mit dem ersten Ausgang des fünften Komparators (26) verbunden ist, mit einem Subtrahier-Steuereingang, der mit dem Ausgang einer AND-Torschaltung (29) verbunden ist, deren erster Eingang mit dem zweiten Ausgang des vierten Komparators (25) und deren zweiter Eingang mit dem ersten Ausgang des fünften Komparators (26) verbunden ist, mit zwei Dateneingängen, von denen der eine einen Wert $d_p$ empfängt, welcher von einem zweiten Ausgang des Speichers (24) der Gruppe von Zähler- und Komparatorelementen (900) geliefert wird, und der andere einen festen Wert $\delta_p$ empfängt, sowie mit einem Ausgang, der entweder $d_p + \delta_p$ oder $d_p - \delta_p$ liefert, je nach dem Zustand der Steuereingänge ; einen Umschalter (28), der zwei Stellungen aufweist, mit einem Steuereingang, welcher mit dem zweiten Ausgang des fünften Komparators (26) verbunden ist, einem ersten Eingang, welcher den Wert $d_p$ empfängt, der von dem zweiten Ausgang des Speichers (24) der Gruppe von Zähler- und Komparatorelementen (900) geliefert wird, mit einem zweiten Eingang, welcher den Wert $d_p \pm \delta_p$ empfängt, der vom Ausgang des Addierers-Subtrahierers (27) geliefert wird, und mit einem Ausgang, welcher die an seinen ersten Eingang angelegten Daten abgibt, wenn $|r_p| > \xi$, und die an seinen zweiten Eingang angelegten Daten abgibt, wenn $|r_p| \leq \xi$ ; einen Zähler (23) mit einem Takteingang, der ein Signal der Frequenz F empfängt, und einem Ausgang, welcher ein Signal der Frequenz F/m liefert, durch den der Speicher (24) freigegeben wird (m ganzzahlig positiv).

8. Demodulator nach einem der Ansprüche 1 bis 7, dadurch gekennzeichnet, daß die Mittel (13) zur Abschätzung des Bitwertes, der mit der größten Wahrscheinlichkeit übertragen wurde, eine Rechenvorrichtung (132) umfassen, die an einen Speicher (131) angekoppelt ist, welcher an den Ausgang der Mittel (600) zur Bestimmung und Abtastung der Phase angekoppelt ist, und an den Ausgang der Mittel (700) zur Bestimmung des Wertes eines Bits angekoppelt ist ; wobei ein Eingangsanschluß (103) einen Eingang des Speichers (131) mit dem Ausgang der Phasenverzerrungs-Abschätzmittel (12) verbindet, um die Verzerrungswerte $d_p$ zu übertragen ; mit einem Ausgangsanschluß (84), der einen Wert $a'_i$ liefert, welcher der mit der größten Wahrscheinlichkeit durch das ite Bit übertragene Wert ist und welcher nach einem Algorithmus bestimmt wird, der daraus besteht, daß :

— aus dem Speicher (131) die vier Verzerrungswerte $d_p$ ($a_{i-1}$, $b_i$, $b_{i+1}$) ausgelesen werden, deren Adressen durch die vier möglichen Werte von ($b_i$, $b_{i+1}$) gegeben sind, worin $b_i$, $b_{i+1}$ die möglichen Werte des iten bzw. des i + 1ten Bits sind, welche dem Wert $a_{i-1}$ des i − 1ten Bits zugeordnet sind, und welche durch die Mittel (700) zur Bestimmung des Wertes eines Bits geliefert werden ;

— daß vier korrigierte Phasenwerte berechnet werden nach der Formel :

$$\phi_i'(a_{i-1}, b_i, b_{i+1}) = \phi_i + d_p(a_{i-1}, b_i, b_{i+1})$$

— daß die vier Werte berechnet werden, welche dem Ausdruck

$$E = \phi_i'(a_{i-1}, b_i, b_{i+1}) - \theta_i(b_i)$$

entsprechen, worin $\theta_i$ ($b_i$) der Phasenwert ist, welcher theoretisch für ein übertragenes Bit vom Wert $b_i$ empfangen würde ;

— daß bestimmt wird, für welchen Wert von $b_i$ der Absolutwert |E| der kleinste ist ;

— daß angenommen wird, daß dieser Wert $b_i$ derjenige Wert $a_i'$ für das ite Bit ist, welcher mit der größten Wahrscheinlichkeit übertragen wurde.

9. Demodulator nach Anspruch 8, dadurch gekennzeichnet, daß der durch die Rechenvorrichtung (132) angewendete Algorithmus ferner darin besteht, daß, wenn mehrere aufaufeinanderfolgende Bits einen zweifelhaften Wert aufweisen :

— zuvor unter der Folge von aufeinanderfolgenden zweifelhaften Bits dasjenige gesucht wird, welches am zweifelhaftesten ist, indem dasjenige bestimmt wird, für welches der Ausdruck :

$$\left| \frac{\pi}{2} - | \phi_i - \phi_{i-1} | \right|$$

maximal ist ;

— daß über den Algorithmus nach Anspruch 8 der Wert gesucht wird, welcher mit der größten Wahrscheinlichkeit für dieses Bit übertragen wurde ;

— daß anschließend das Bit unter den in der Folge verbleibenden zweifelhaften Bits gesucht wird, welches am zweifelhaftesten ist ;

— dieser Vorgang wiederholt wird, bis keine zweifelhaften Bits mehr in der Folge verbleiben ;

— daß ein zweiter Wert $a_i''$ von der größten Wahrscheinlichkeit für jedes zweifelhafte Bit berechnet wird, bei dem das vorausgehende Bit seinen Wert $a_{i-1}$ geändert hat, im Anschluß an eine Berechnung seines wahrscheinlichsten Wertes $a_{i-1}'$ ;

— daß dieser zweite Wert $a_i''$ behalten wird, wenn

$$\left| \phi'(a_{i-1}, a_i'', a_{i+1}) - \theta_i(a_i'') \right| < \left| \phi_i'(a_{i-1}, a_i', a_{i+1}) - \theta_i(a_i') \right| .$$

10. Demodulator nach einem der Ansprüche 1 bis 8, dadurch gekennzeichnet, daß er Entscheidungsmittel (11) enthält, um ein Logiksignal $D_i$ zu erzeugen, wenn die Bestimmung des Wertes $a_i$ eines Bits zweifelhaft ist, und dieses Logiksignal zu den Verzerrungs-Abschätzmitteln (12), zu den Mitteln (13) zur Abschätzung des mit der größten Wahrscheinlichkeit übertragenen Wertes und zu einer ersten Verzögerungsvorrichtung (82) zu liefern, die es um n.T. verzögert ; mit einer zweiten Verzögerungsvorrichtung (83), die den Wert $a_i$ eines Bits, welches durch die Bestimmungsmittel (700) geliefert wurde, empfängt und um n.T. verzögert ; mit Selektionsmitteln (80), die einen ersten Eingang aufweisen, welcher mit dem Ausgang der Mittel (13) zur Abschätzung des wahrscheinlichsten Bitwertes verbunden ist, einen zweiten Eingang aufweisen, der mit dem Ausgang der zweiten Verzögerungsvorrichtung (83) verbunden ist, einen Steuereingang aufweisen, welcher mit dem Ausgang der ersten Verzögerungseinrichtung (82) verbunden ist, und einen Ausgang aufweisen, der den Ausgang des Demodulators bildet und der entweder die Daten überträgt, die an seinen ersten Eingang angelegt werden, oder die Daten überträgt, welche an seinen zweiten Eingang angelegt werden, je nach dem Wert des Logiksignals $D_i$, welches an seinen Steuereingang angelegt wird, so daß die unzweifelhaften Bitwerte $a_i$ zum Ausgang des Demodulators geführt werden, ohne durch die Mittel (13) zur Abschätzung des mit der größten Wahrscheinlichkeit übertragenen Bits verarbeitet zu werden ; und daß n derart gewählt ist, daß n.T. gleich der Rechenzeit dieser Abschätzmittel (13) ist.

11. Übertragungssystem, dadurch gekennzeichnet, daß es einen Demodulator nach einem der Ansprüche 1 bis 9 enthält.

16

FIG_1

# FIG_2

$\varphi_i$ ⌐108

**8** ⌐

```
DISPOSITIF
A           ⌐71
RETARD T/2
```

```
         ⌐72
    —
```

```
         ⌐44
    
```

| 45 ⌐ | 46 ⌐ | 47 ⌐ | 48 ⌐ |
|---|---|---|---|
| COMPARATEUR | COMPTEUR | COMPTEUR | COMPARATEUR |

S

49 ⌐

105 ⌐

```
    —
```

S

2F

| 52 ⌐ | 53 ⌐ | 50 ⌐ |
|---|---|---|
| DIVISEUR | DISPOSITIF DE TRAITEMENT | COMPARATEUR |

$S_1$

F

⌐ 109          ⌐ 110

# FIG_4

| | ⌐107 | ⌐119 | ⌐118 | ⌐106 |
|---|---|---|---|---|
| | $D_i$ | $\varphi_i$ | $a_i$ | $\Delta\varphi_i$ |

**13** ⌐

103 ⌐

| MEMOIRE | DISPOSITIF DE CALCUL |
|---|---|

131 ⌐          132 ⌐

84 ⌐ $a'_{i-n}$

# FIG_3

# FIG_5

# FIG_6

4